(19) Europäisches Patentamt

European Patent Office

Office européen des brevets

(11) Veröffentlichungsnummer: **0 302 335 B1**

(12) **EUROPÄISCHE PATENTSCHRIFT**

(45) Veröffentlichungstag der Patentschrift: **16.09.92**

(21) Anmeldenummer: **88111929.1**

(22) Anmeldetag: **25.07.88**

(51) Int. Cl.⁵: **G03B 42/04**

(54) Verfahren in einem Röntgenkassettenent-und-beladegerät zur Überprüfung des Vorhandenseins von Röntgenblattfilm in einer Kassette und nach dem Verfahren arbeitendes Gerät.

(30) Priorität: **04.08.87 DE 3725847**

(43) Veröffentlichungstag der Anmeldung:
**08.02.89 Patentblatt 89/06**

(45) Bekanntmachung des Hinweises auf die
Patenterteilung:
**16.09.92 Patentblatt 92/38**

(84) Benannte Vertragsstaaten:
**ES FR IT**

(56) Entgegenhaltungen:
**DE-A- 3 306 720**
**DE-C- 2 838 058**
**DE-C- 3 230 287**
**DE-C- 3 232 187**
**US-A- 4 553 369**

(73) Patentinhaber: **Agfa-Gevaert AG**

**W-5090 Leverkusen 1(DE)**

(72) Erfinder: **Bauer, Walter**
**Heinrich-Wieland-Strasse 178**
**W-8000 München 83(DE)**
Erfinder: **Schmidt, Manfred, Dipl.-Ing.**
**Ligusterweg 34**
**W-8011 Kirchheim(DE)**
Erfinder: **Widemann, Ernst, Dipl.-Ing.**
**Jakob-Schmid-Strasse 9**
**W-8060 Dachau(DE)**

EP 0 302 335 B1

## Beschreibung

Die Erfindung betrifft eine Vorrichtung zum Be- und Entladen von Röntgenblattfilmkassetten nach dem Oberbegriff des Anspruchs 1, ein Verfahren zur Überprüfung des Vorhandenseins eines Röntgenblattfilms in einer derartigen Vorrichtung nach dem Oberbegriff des Anspruchs 4 sowie eine Röntgenblattfilmkassette zur Verwendung in einer derartigen Vorrichtung nach dem Oberbegriff des Anspruchs 9.

Röntgenkassettenent- und- beladegeräte unter Verwendung von wesentlichen Merkmalen des eingangs genannten Überprüfungsverfahrens sind bekannt durch die DE-A 33 06 720. Dabei wird mittels eines Infrarotlicht-Reflexabtasters der Boden einer in das Gerät eingegebenen, geöffneten Kassette abgetastet. Die genannte Vorrichtung arbeitet nicht zuverlässig, weil der Reflexionsunterschied zwischen Film und Verstärkerfolie, der zur Feststellung von vorhandenem oder nicht vorhandenem Film ausgenutzt wird, zu gering ist. Bei einer zweiten Vorrichtung ist deshalb im Strahlengang des Infrarotlicht-Reflexabtasters auf der Verstärkerfolie ein Flächenstück eines besonderen Reflektors aufgebracht. Diese Ausbildung hat den Nachteil, daß Kassetten ohne diesen Reflektor nicht verwendbar sind.

Außerdem sind Röntgenblattfilmkassetten bekannt, bei denen unter der Verstärkerfolie eine Stahlfolie oder eine Magnetfolie im Bodenteil angeordnet ist und die Verstärkerfolie nur stellenweise mit der Stahlfolie verklebt ist und beide zusammen flexibel, also in gewissen Grenzen beweglich im Kassettenbodenteil befestigt sind. Derartige Kassetten sind z.B. in der DE-C 32 30 287 beschrieben und werden in Röntgenkassettenent- und -beladegeräten z.B. nach der DE-C 32 32 187 in der Praxis verwendet. Hierbei ist eine Abtastvorrichtung vorgesehen, die abtasten kann, ob Film in einer in ein Gerät eingegebenen Kassette vorhanden ist oder nicht. Diese Abtastung wird dadurch funktionssicher, daß hierbei Kassetten verwendet werden, bei denen ein Anzeigeknopf außen anzeigt, ob Film in der Kassette vorhanden ist oder nicht, die also zusätzlich das Merkmal nach der DE-C 28 38 058 aufweisen. Der hier beschriebene Anzeigeknopf ist vor allem für den Benutzer einer Kassette bei einer Röntgenaufnahme von Bedeutung, weil der Benutzer hierdurch an der geschlossenen Kassette erkennen kann, ob sich Film in ihr befindet. Die Abtastung des Anzeigeknopfes in einem Kassettenent- und -beladegerät ist aber nicht nur mechanisch etwas aufwendig, sondern hat noch den Nachteil, daß beim Abtasten des Anzeigeknopfes außen an der Kassette nicht erkannt werden kann, ob beim öffnen der Kassette der Film u.U. am Kassettendeckel kleben geblieben ist und daher trotz Vorhandenseins nicht im Kassettenbodenteil zur Entnahme zur Verfügung steht, so daß Fehlfunktionen verursacht werden können.

Der Erfindung liegt die Aufgabe zugrunde, ein Verfahren der eingangs genannten Art bzw. ein Röntgenkassettenent- und -beladegerät mit einer überprüfungsvorrichtung für in eingegebenen Kassetten vorhandenen Film so auszugestalten, daß bekannte Röntgenblattfilmkassetten mit einer bodenseitigen, mit einer Metallfolie (Magnetgegenfolie) oder einer Magnetfolie verbundenen, teilweise beweglich gelagerten Verstärkerfolie unverändert verwendbar sind.

Diese Aufgabe wird gelöst durch die Merkmale nach dem Hauptanspruch bzw. die Merkmale des Verfahrensanspruchs 6. Weitere vorteilhafte Einzelheiten sind den Unteransprüchen entnehmbar. Eine vorteilhaft zur Verwendung in der Vorrichtung geeignete Röntgenblattfilmkassette ist Gegenstand des Anspruchs 9.

Durch die Erfindung wird erreicht, daß anstelle bekannter mechanischer Abtastmechanismen oder eines Infrarot-Reflexionsabtasters nur ein einfacher Näherungsschalter bekannter Bauart, vorzugsweise ein Induktionsschalter, u.U. aber auch eine Hallsonde, vorgesehen und zur Auswertung der Schaltzustände mit der Steuerelektronik des Kassettenent- und -beladegerätes verbunden sein muß.

Die Erfindung wird anhand von Zeichnungen näher erläutert. Es zeigen

Fig. 1   eine schematische, perspektivische Darstellung der wesentlichen Teile des erfindungsgemäßen Röntgenkassettenent- und -beladegerätes ohne Einzelheiten zu entladender Kassetten,

Fig. 2   einen vergrößerten, nicht maßstäblichen, abgebrochenen Schnitt durch eine in dem Gerät nach Figur 1 verwendbare Röntgenblattfilmkassette und die für das erfindungsgemäße Verfahren und das erfindungsgemäße Gerät wesentlichen Teile bei in der Kassette vorhandenem Blattfilm,

Fig. 3   die Darstellung nach Figur 2 bei in der Kassette nicht vorhandenem Blattfilm,

Fig. 4 und 5   die Darstellung nach den Figuren 2 und 3, jedoch mit kassettenseitigen Abwandlungen,

Fig. 6 und 7   die Darstellungen nach den Figuren 2 und 3, jedoch mit geräteseitigen Abwandlungen.

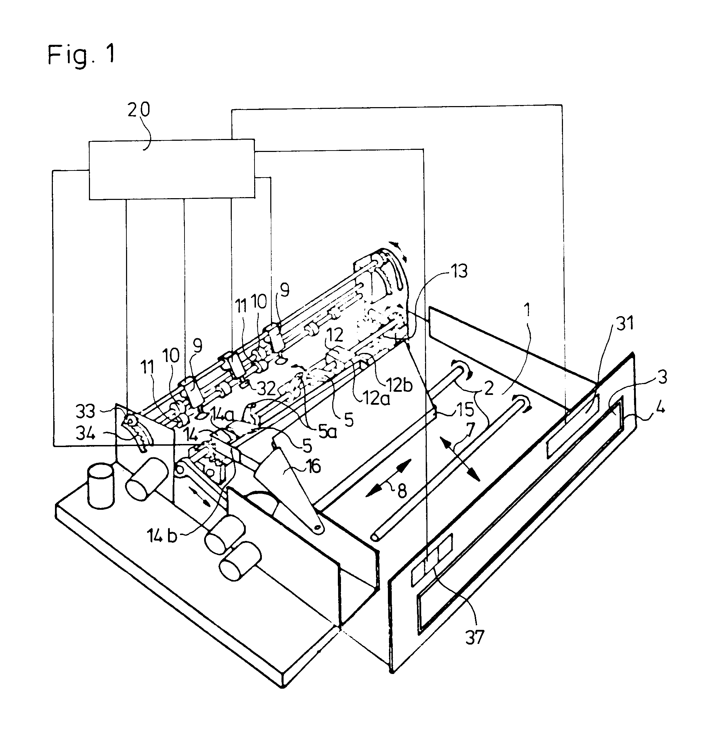

Zur Erläuterung der Erfindung wurde in Figur 1 ausgegangen von einer Röntgenfilmkassettenbe- und -entladevorrichtung nach der DE-C 32 32 187. Nach dem nachfolgend geschilderten Prinzip läßt sich die Erfindung aber auch bei allen anderen bekannten Planfilmkassettenbeladegeräten für Kassetten mit anhebbarem Deckel anwenden. In der Beschreibung werden nur die wichtigsten Merkmale derartiger bekannter Kassettenbeladevorrichtungen erwähnt, soweit sie zum Verständnis der gezeigten Ausführungsbeispiele nach der Erfindung erforderlich sind.

Dabei sind mit 1 ein Schacht zur Aufnahme jeweils einer Kassette, mit 2 Transportmittel zum Ein- und Ausführen einer Kassette, die durch am Schachtboden angeordnete Transportwalzen gebildet werden können, und mit 3 nur schematisch angegebene Mittel zum lichtdichten Verschließen einer Eingabeöffnung 4 des Schachtes 1 bezeichnet. Stirnseitig im Schacht 1 sind bekannte Mittel 5, 5a zum Entriegeln und Wiederschließen einer an einem später zu beschreibenden Anschlag angelangten Kassette vorgesehen, die beispielsweise so wirken können, daß die Schieber 5 eine nicht gezeigte Verzahnung aufweisen, mit der sie in die Riegel der Kassette eingreifen und dann durch eine Bewegung quer zur Kassettentransportrichtung 7 die Riegel betätigen, so daß der Kassettendeckel z. B. unter der Wirkung schwacher Federn aufspringt oder durch an schwenkbaren Seitenteilen 16 angeordnete Haken angehoben wird.

Eines der Öffnungsmittel 5 muß in nicht gezeigter Weise in der zur Kassetteneingaberichtung 7 transversalen Richtung 8 derart verschiebbar sein, daß die Öffnungsvorrichtung an die unterschiedlichen, in der Vorrichtung verwendbaren Kassettenformate automatisch anpaßbar ist. Stirnseitig über und/oder vor der Vorrichtung 5 zum Öffnen einer Kassette sind bekannte Mittel 9, 10, 11 zum Entnehmen eines Filmblattes aus der Kassette und zum Einführen eines neuen Filmblattes in die Kassetten angeordnet. Diese Ent- und Belademittel bestehen aus geeignet angeordneten und durch eine elektronische Steuervorrichtung 20 gesteuerten Saugern 9 und diesen zugeordneten Transportwalzenpaaren 10, 11. Im übrigen sind in bekannter und daher nicht gezeigter Weise Blattfilmvorratsmagazine vorgesehen, die Filme der verschiedenen Formate enthalten, mit denen die in der Vorrichtung verwendbaren Kassetten der unterschiedlichen Formate beladen werden sollen. Außerdem ist in nicht gezeigter Weise entweder ein Zwischenmagazin zum Sammeln der den Kassetten entnommenen Filme vorgesehen oder es ist eine Entwicklungsmaschine für die entnommenen Filme direkt angeschlossen.

Die Ermittlung des Formates einer eingegebenen Kassette und die Auswahl und Zuführung eines hierzu passenden neuen Filmblattes erfolgt automatisch z. B. nach automatischer Ausmessung mindestens einer Kassettenseite. Vor oder bei Ermittlung des Formates einer eingegebenen Kassette muß diese genau positioniert sein.

Somit ist eine zur Eingaberichtung 7 transversale Verschiebeeinrichtung erforderlich, die in Pfeilrichtung 8 hin- und herbewegbar sein muß. Diese transversale Verschiebeeinrichtung weist z.B. eine als rechtwinkeliges Winkelstück 12a, 12b ausgebildete Klemmbacke 12 auf, die zugleich mit den übrigen verschiebbaren Teilen zum Positionieren einer Kassette 15 verbunden ist. Die verschiebbare Klemmbacke 12 ist gegenüber einer weiteren, bezüglich der transversalen Verschieberichtung 8 festen, ebenfalls als rechtwinkeliges Winkelstück 14a, 14b ausgebildeten Klemmbacke 14 verschiebbar. Die Schenkel 14a, 14b bilden dabei einen seitlichen und stirnseitigen Anschlag für die mittels der Transportwalzen 2 in den Schacht 1 transportierte Kassette 15. Die beiden Klemmbacken 12, 14 sind so auf einer Stange 13 angeordnet, daß ihre aufeinander zu gerichteten Schenkel 12a, 14a miteinander fluchten. Eine gegen die Anschläge 14a, 14b transportierte Kassette wird beim Hinbewegen der Klemmbacke 12 also einfach geklemmt und dadurch positioniert. Eine irgendwie zwischen der Klemmbacke 14 und der in Ausgangsstellung befindlichen, verschiebbaren Klemmbacke 12 antransportierte Kassette wird beim Bewegen der Klemmbacke 12 unter der zusätzlichen Wirkung der Transportrollen 2 gegen die Anschläge 14a, 12a bewegt und zwischen den Schenkeln 14b, 12b ausgerichtet. An den stirnseitigen Schenkeln 14a, 12a und ggf. bei sehr unterschiedlich großen Kassetten dazwischen sind nicht gezeigte Schaltkontakte vorgesehen, die beim Eintreffen einer neu eingegebenen Kassette 15 den Antrieb für die verschiebbare Klemmbacke 12 einschalten. Weitere Schalter können beispielsweise als Lichtschranken oder Mikroschalter ausgebildet sein, die bei der Positionierbewegung einer Kassette von Schaltfahnen durchlaufen werden und über die elektronische Steuervorrichtung 20 das Kassettenformat ermitteln. Natürlich kann auch jede andere bekannte Vorrichtung zur Kassettenformatermittlung und Kassettenpositionierung verwendet werden.

Es kann in bekannter Weise zweckmäßig sein, eine Kassette 15 mit schwenkbarem oder anhebbarem Deckel 15a von einer ersten Anschlagposition, in der die transversale Verschiebeeinrichtung 12 eingeschaltet wird, in eine zweite Stellung zu verschieben, in der der Deckel 15a durch eine Hebevorrichtung 16 geöffnet ist und durch einen Sauger 9 ein belichteter Film aus der Kassette entnommen und in der ein neues Filmblatt in den Kassettenbodenteil 15c eingegeben wird. Zum Abtransport des belichteten Films und zur Eingabe eines neuen Films dient dabei unmittelbar vor der Kassettenstirnseite bzw. deren Oberkante 15b das Transportwalzenpaar 10, 11. Die geöffnete Ent- und Beladestellung einer Kassette muß dabei jedoch dieselbe sein.

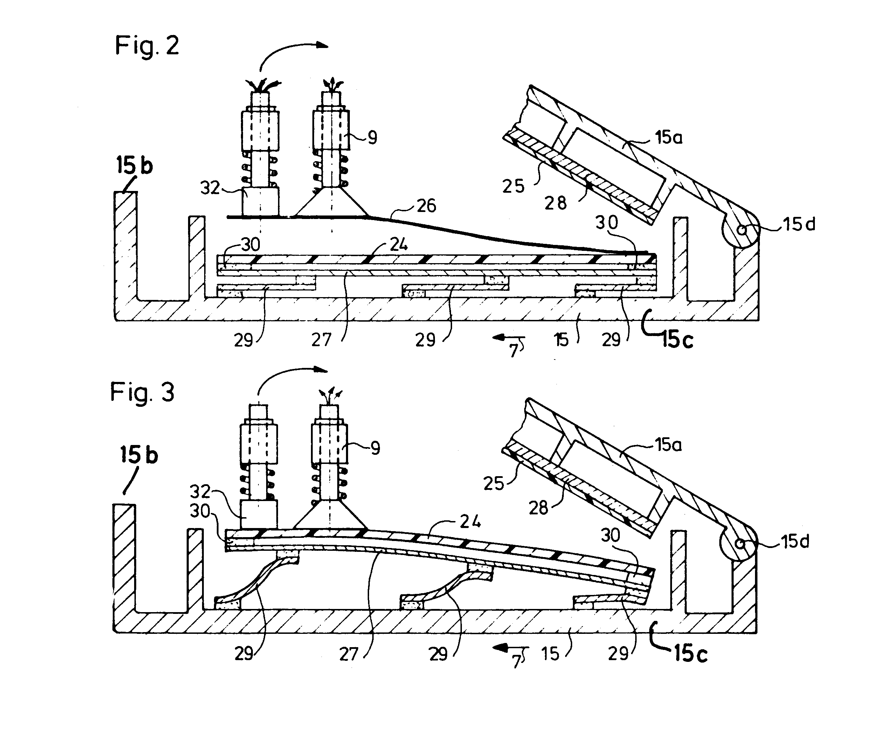

Die gemäß den Figuren 2 und 3 im Gebrauch befindlichen Röntgenblattfilmkassetten mit einem Bodenteil 15c und einem um ein Scharnier 15d schwenkbaren Deckel 15a weisen gewöhnlich im geschlossenen Zustand ineinandergreifende, umlaufende Labyrinthrippen auf. Innerhalb der Innenfläche des Bodenteiles 15c ist eine Verstärkerfolie 24, häufig darunter noch eine Magnetgegenplatte oder Magnetplatte 27 befestigt. Im Deckelteil 15a ist häufig eine Schaumstoffandruckplatte und daran eine Magnetplatte 28 bzw. Magnetgegenplatte und darauf wieder eine Verstärkerfolie 25 gelagert, so daß ein in die Kassette eingelegter Röntgenblattfilm 26 im geschlossenen Zustand der Kassette zwischen die beiden Verstärkerfolien 24, 25 gepreßt ist.

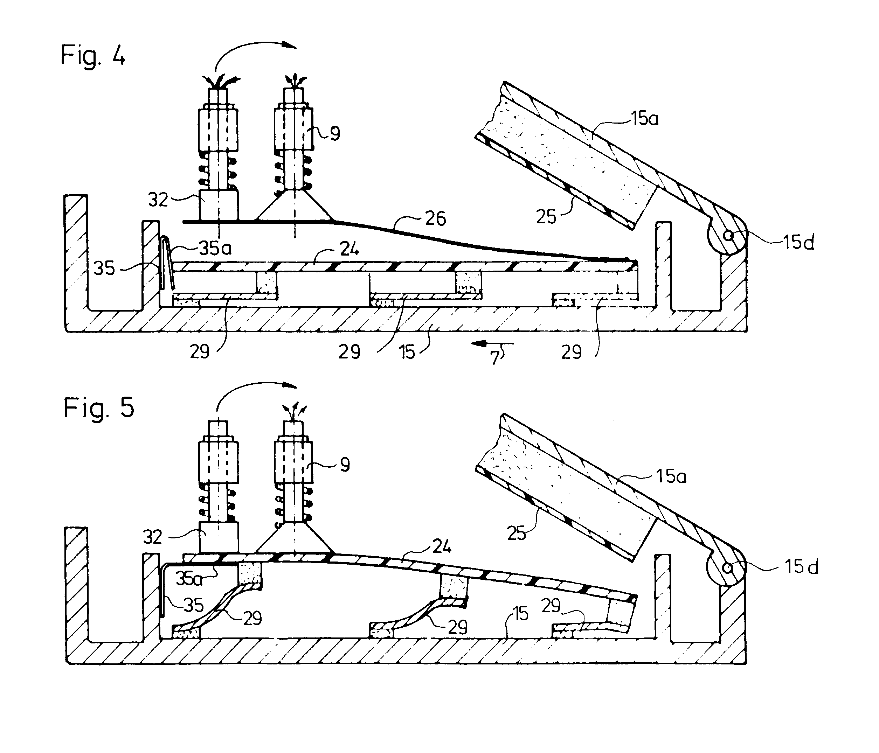

Gemäß der DE-C 32 30 287 werden die Befestigungselemente zwischen Kassettenbodenteil 15c und Magnetgegenplatte 27 bzw. gemäß Figuren 4 und 5 zwischen Bodenteil 15 und Verstärkerfolie 24 durch flexible Folienstreifen 29 ausgebildet, welche mit einem ersten Teil am Bodenteil 15c und mit eine zweiten Teil an der Magnetgegenplatte 27 bzw. der Verstärkerfolie 24 angebracht sind, wobei sich erster und zweiter Teil nicht gegenüberliegen. Gemäß den Figuren 2 und 3 bzw. 6 und 7 sind Magnetgegenplatte 27 und Verstärkerfolie 24 durch ein Klebeband 30 stellenweise miteinander verbunden; sie könnten aber auch flächig verklebt sein. Hierdurch sind Verstärkerfolie 24 und Gegenplatte 27 in gewissen Grenzen gemeinsam beweglich im Bodenteil 15c befestigt. Insbesondere sind sie anhebbar. Dies war ursprünglich zur Erzielung einer guten Pressung des Films 26 erwünscht, hat sich nun aber gemäß der Erfindung noch als Vorteil für die Feststellung von vorhandenem oder nicht vorhandenem Film 26 erwiesen. Die Beweglichkeit der bodenseitigen Verstärkerfolie 24 bzw. Verstärkerfolie 24 mit Gegenplatte 27 kann aber auch durch alle anderen hierfür bekannten Mittel erreicht werden, z.B. dadurch, daß flächig verklebte Folien in ihren Randpartien nicht mit dem Bodenteil 15c verklebt sind und in diesen Bereich hochklappen können. Die gezeigte bewegliche Befestigung mittels der Folienstreifen 29 hat den Vorteil, daß Verstärkerfolie und/oder Gegenplatte (bzw. Magnetplatte) senkrecht zu ihrer Ebene durch die üblichen Sauger 9 anhebbar, aber ggf. beim Entnahmetransport der Blattfilme 26 durch nicht gezeigte Reibrollen auch durch diese in horizontaler Richtung etwas verschiebbar sind.

Bei einem Kassettenent- und -beladegerät nach Figur 1 sind folgende Überprüffunktionen erwünscht:

Wird auf der Befehlstastatur 37 der Befehl einer Kassettenentleerung und -neubeladung eingegeben und festgestellt, daß kein Röntgenfilm 26 über der Verstärkerfolie 24 liegt, so soll z.B. die eingegebene Kassette verschlossen und aus der Ent- und Beladevorrichtung wieder ausgegeben werden und es soll an einem Anzeigefeld 31 ein Hinweise erscheinen, daß kein Film 26 in der Kassette erkannt worden ist. Der Benutzer kann an der geschlossen ausgegebenen Kassette durch irgendeine bekannte Filmanzeigevorrichtung prüfen, ob tatsächlich kein Film in der Kassette enthalten war oder der Film beim Öffnen am Deckel hängengeblieben ist und daher nicht zur Entnahme bereit lag. Im ersten Fall gibt der Benutzer die Kassette nochmals in die Ent- und Beladevorrichtung ein mit dem Befehl, daß sie nur geladen werden soll. Im zweiten Fall gibt er sie nochmals mit dem Befehl zur Ent- und ggf. zur Neubeladung ein. Stellt sich heraus, daß der Film wieder am Deckel hängenbleibt, so wird die Kassette wieder geschlossen aus der Ent- und Beladevorrichtung heraustransportiert und muß dann in einer Dunkelkammer entladen werden.

Ein analoger Funktionsablauf findet bei einem Befehl der Wiederbeladung einer Kassette statt. Ist diese entladen oder ungeladen eingegeben worden und ist das Filmformat bestimmt und entsprechender Film in die Kassette eingegeben worden, so wird durch die Steuervorrichtung 20 eine erneute Überprüfung veranlaßt. Wird dabei die Verstärkerfolie 24 als durch einen neuen Film 26 abgedeckt gemeldet, so wird die Kassette geschlossen und aus der Ent- und Beladevorrichtung transportiert, und auf dem Anzeigefeld 31 erscheint die neue Meldung "geladen". Ist jedoch kein Film geeigneten Formats im entsprechenden Vorratsmagazin mehr vorhanden oder ist eine Transportstörung beim Beladen aufgetreten, dann erfolgt die Meldung, daß die Kassette nicht neu beladen ist. Ein Benutzer wird also sofort darauf aufmerksam, daß eine Beladestörung aufgetreten ist.

Für die Überprüfung auf über der Verstärkerfolie 24 vorhandenen oder nicht vorhandenen Film wird nun erfindungsgemäß ein Verfahren verwendet, das geräteseitig nur äußerst einfache Mittel, nämlich einen Näherungsschalter 32 in geeigneter Anordnung nahe dem Angriffsbereich eines der Sauger 9, erfordert. Dieser Näherungsschalter 32 kann bei Vorhandensein einer Stahlgegenfolie 27 bzw. statt dessen einer Magnetfolie ein Induktionsschalter sein. Bei Vorhandensein eines Magneten, der mit der Verstärkerfolie 24 in Wirkverbindung steht, kann der Näherungsschalter 32 auch als Hallsonde ausgebildet sein.

Nach den Figuren 1 bis 3 kann der Näherungsschalter 32 auf demselben Schwenk- und Antriebsmechanismus 33, 34 in einer Reihe mit den Saugern 9 gelagert sein. In den Figuren 2 bis 5 ist er demgegenüber der besseren Erkennbarkeit wegen um 90° gedreht gezeichnet. Er könnte aber auch am Gerät nach Figur 1 so gelagert sein, daß die in den Figuren 2 bis 5 gezeigte Stellung die richtige wäre, er also in Kassetteneingaberichtung 7 vor den Saugern 9 angreift.

Gemäß den Figuren 1 bis 3 wird nun folgendes Verfahren zur Überprüfung einer geöffneten Kassette 15 auf vorhandenen oder nicht vorhandenen Film angewandt. Zunächst werden Sauger 9 und Näherungsschalter 32 gemeinsam gegen den Kassettenboden 15c bewegt und der Sauger 9 eingeschaltet. Er saugt entweder vorhandenen Film 26 oder die mit der Gegenfolie 27 verbundene bewegliche Verstärkerfolie 24 an. Beim Ansaugen kommt der Näherungsschalter 32 in den Bereich der Gegenfolie 27 und erfährt eine entsprechende Zustandsänderung, die er an die Steuerschaltung 20 meldet. Dann werden Sauger 9 und Näherungsschalter 32 gemäß den Figuren 2 und 3 angehoben. Befindet sich Film 26 auf der Verstärkerfolie 24, so wird dieser gemäß Figur 2 allein hochgezogen; der Näherungsschalter 32 gelangt wieder aus dem Induktionsbereich der Gegenfolie 27. Die Meldung dieser seiner zweiten Zustandsänderung wird erneut an die Steuerschaltung 20 gemeldet, die diese Meldung als Vorhandensein eines Filmes 26 auswertet und die weiteren Funktionsabläufe des Gerätes veranlaßt. Befindet sich kein Film auf der Verstärkerfolie 24, so werden durch den Sauger 9 gemäß Figur 3 Verstärkerfolie 24 und Gegenfolie 27 angehoben; der Näherungsschalter 32 bleibt im Induktionsbereich der Gegenfolie 27. Wird dabei eine vorgebbare Hubhöhe erreicht, so erkennt die Steuerschaltung 20, daß die zweite Zustandsänderung des Näherungsschalters 32 ausgeblieben ist und demnach kein Film 26 auf der Verstärkerfolie 24 lag, und veranlaßt die dann erforderlichen, vorher beschriebenen Funktionsabläufe des Gerätes. Dieser Verfahrensablauf kann beim Eingeben einer geladenen Kassette 15 in das Gerät durch die Steuerschaltung 20 veranlaßt werden. Er kann aber auch automatisch nach dem Neubeladen einer eingegebenen Kassette durch die Steuerschaltung 20 so weit wiederholt werden, bis durch das Auftreten oder nicht Auftreten der zweiten Zustandsänderung des Näherungsschalters 32 festgestellt ist, ob neuer Film 26 in die Kassette lagerichtig eingeführt worden ist. Dann wird der Sauger 9 abgeschaltet und zusammen mit dem Näherungsschalter 32 in seine Ausgangsstellung zurückgeführt, so daß ggf. vorhandener Film 26 sowie Verstärkerfolie 24 und Gegenplatte 27 in ihre Funktionslage am Kassettenboden 15c zurückfallen und die Kassette geschlossen und ausgegeben werden und ggf. in der Anzeigevorrichtung 31 die Neu- bzw. Nichtbeladung angezeigt werden kann.

Die Kassettenausgestaltung nach den Figuren 4 und 5 unterscheidet sich von der nach den Figuren 2 und 3 dadurch, daß unter der Verstärkerfolie 24 keine Gegenplatte oder Magnetplatte angeordnet ist. Auch solche Kassettentypen gibt es. Eine derartige Kassette muß zur Anwendung des Verfahrens und zur Verwendung in einem Gerät nach Figur 1 so ausgestaltet oder nachgerüstet werden, daß ein induktiv wirkendes Element beim Ansaugen der Verstärkerfolie 24 in den Bereich des Näherungsschalters 32 unter Verursachung von Zustandsänderungen gelangt. Dies kann ganz einfach dadurch geschehen, daß unter die ja an sich an ihrem vorderen Rande etwas anhebbare Verstärkerfolie 24 ein Metallstreifen oder Magnet geklebt wird. Eine andere Art der Nachrüstung kann darin bestehen, daß eine schwache Blattfeder 35 mit haarnadelförmigem Querschnitt an die innere Kassettenstirnseite geklebt wird und bei Normallage der Verstärkerfolie 24 (vgl. Figur 4) zusammengedrückt ist. Wird dagegen die Verstärkerfolie 24 infolge Fehlens von Film 26 angesaugt, so legt sich der freie Schenkel 35a der Blattfeder 35 unter die Verstärkerfolie 24 (vgl. Figur 5). Der Näherungsschalter 32 erfährt in diesem Falle beim Anheben von Film 26 keine Zustandsänderung und beim Anheben der Verstärkerfolie 24 eine Zustandsänderung. Werden derartige Kassetten verwendet, so muß die Steuerschaltung 20 entsprechend anders programmiert sein bzw. nach den beiden Programmen erkennen und arbeiten können.

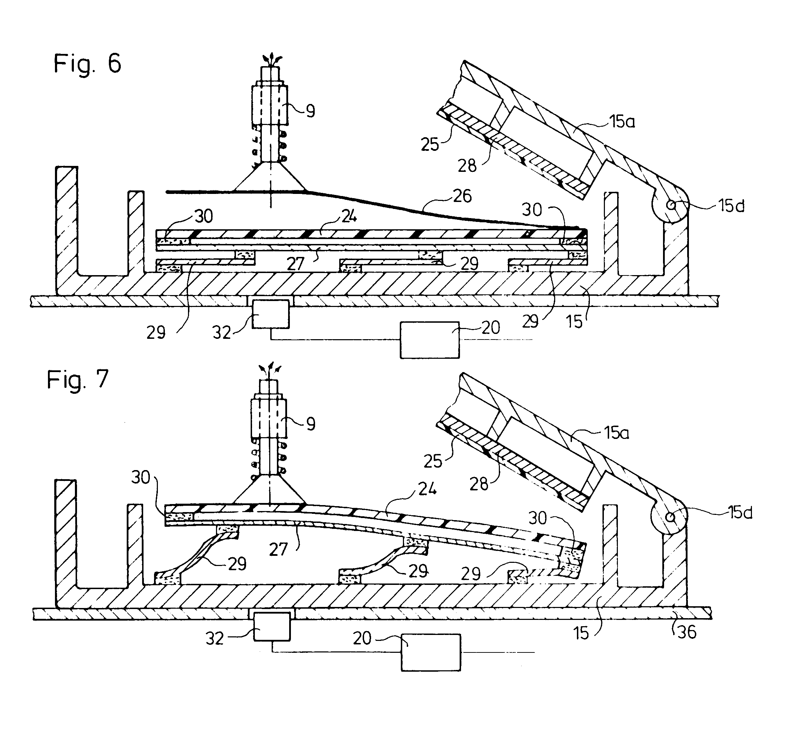

Gemäß den Figuren 6 und 7 ist eine andere mögliche Anordnung des Näherungsschalters 32 zur Durchführung des erfindungsgemäßen Verfahrens gezeigt. Hierbei ist der Näherungsschalter 32 am Boden 36 des Geräteschachtes 1 fest an einer Stelle angeordnet, an der beim Ansaugen durch Sauger 9 die Verstärkerfolie 24 mit Gegenfolie 27 angehoben wird. Bei dieser Ausgestaltung liegt der Näherungsschalter 32 also normalerweise im Induktionsbereich der Gegenfolie 27 und erfährt nur dann eine Zustandsänderung, wenn Verstärkerfolie 24 und Gegenfolie angehoben werden. Eine entsprechende Änderung der Programmierung der Steuerschaltung 20 ist für diese Ausführungsform natürlich erforderlich.

Naturgemäß sind auch noch andere als die gezeigten Ausführungsbeispiele zur Durchführung des erfindungsgemäßen Verfahrens möglich, die der Einfachheit halber nicht in den Figuren gezeigt sind. Wenn Rand und Labyrinth im Bodenteil 15c sehr niedrig ausgebildet sind, könnten als Filmtransportmittel auch Reibrollen verwendet werden. Dann müßten Verstärkerfolie 24 und induktiv oder kapazitiv wirkendes Element 27 weniger anhebbar als geringfügig verschiebbar gelagert sein. Der Näherungsschalter müßte dann in den Verschiebebereich von Verstärkerfolie und Element bewegbar sein.

**Patentansprüche**

1. Vorrichtung zum Be- und Entladen von Röntgenblattfilmkassetten (15), die aus je einem Boden- (15c) und einem schwenkbaren Deckelteil (15a) bestehen und zumindest im Bodenteil (15c) eine begrenzt beweglich gelagerte, mit einem elektrisch oder magnetisch detektierbaren Element (27; 35) verbundene Verstärkerfolie (24) aufweisen, auf der gegebenenfalls ein Röntgenfilmblatt aufliegt, mit
   - einem Schacht (1) zur Aufnahme der Röntgenblattfilmkassette (15),
   - Transportmitteln (2) zum Ein- und Ausführen der Kassette (15),
   - Mitteln (5, 5a, 16) zum öffnen und Anheben des Deckelteils (15a),
   - Mitteln zur Filmentnahme (9) sowie zu deren Betätigung (33, 34),
   - einer elektronischen Steuervorrichtung (20) zur Steuerung des Be- und Entladens der Kassetten (15) mit Blattfilm (26) und
   - einer Vorrichtung zum überprüfen des Vorhandenseins von Blattfilm (26) in der Kassette (15),

   dadurch gekennzeichnet, daß die überprüfungsvorrichtung einen kapazitiv oder induktiv schaltbaren Näherungsschalter (32) aufweist, in oder außerhalb dessen Ansprechbereich das Element (27; 35) bei geöffneter Kassette (15) liegt und aus dem es heraus bzw. in den es hinein bewegbar ist, wobei der Näherungsschalter (32) unterschiedliche Ausgangssignale an die Steuervorrichtung (20) liefert, wenn die Filmentnahmemittel (9), z.B. Sauger, entweder den vorhandenen Blattfilm (26) oder bei dessen Fehlen die Verstärkerfolie (24) mit dem Element (27; 35) und somit letzteres gegenüber dem Näherungsschalter (32) bewegen, und daß eine von der Steuervorrichtung (20) in Abhängigkeit von den Ausgangssignalen des Näherungsschalters (32) gesteuerte Anzeigevorrichtung (31) vorgesehen ist.

2. Vorrichtung nach Anspruch 1, dadurch gekennzeichnet, daß der Näherungsschalter (32) zusammen mit den Filmentnahmemitteln (9) durch deren Bewegungsmechanismus (33, 34) bewegbar ist.

3. Vorrichtung nach Anspruch 1, dadurch gekennzeichnet, daß der Näherungsschalter (32) fest am Gerät unterhalb des Kassettenbodenteils (15c) angeordnet ist.

4. Verfahren zur Überprüfung des Vorhandenseins eines Röntgenblattfilms in einer Vorrichtung nach einem der Ansprüche 1 bis 3, bestehend aus den Schritten:
   - Einführen einer Röntgenblattfilmkassette (15) in eine vorgegebene Position in der Vorrichtung,
   - Öffnen der Kassette (15),
   - Betätigung der Filmentnahmemittel (9) zum Anheben entweder des auf der Verstärkerfolie (24) aufliegenden Blattfilms (26) oder der im Kassettenbodenteil (15c) in gewissen Grenzen beweglichen Verstärkerfolie (24) selbst zusammen mit dem elektrisch oder magnetisch detektierbaren Element (27; 35) und
   - Anzeigen einer die An- oder Abwesenheit des Blattfilms (26) betreffenden Information in Abhängigkeit vom Ausgangssignal des Näherungsschalters.

5. Verfahren nach Anspruch 4, dadurch gekennzeichnet, daß bei auf der Verstärkerfolie (24) aufliegendem Blattfilm (26) dieser durch Filmentnahmemittel (9) von der Verstärkerfolie (24) und von dem Element (27) abgehoben wird, während letztere in Ruhe gelassen werden, und dadurch eine oder mehrere andere Zustandsänderungen des Näherungsschalters (32) als bei nicht auf der Verstärkerfolie (24) aufliegendem Blattfilm (26) bewirkt und an die Steuerschaltung (20) gemeldet werden.

6. Verfahren nach Anspruch 4 oder 5, dadurch gekennzeichnet, daß der Näherungsschalter (32) zusammen mit dem Filmentnahmemittel (9) bewegt wird und bei seiner Annäherung an einen Blattfilm (26) und/oder das Element (27) geschlossen wird und beim Anheben eines vorhandenen Blattfilmes (26) wieder geöffnet wird bzw. bei fehlendem Blattfilm (26) und Anheben der Verstärkerfolie (24) geschlossen bleibt.

7. Verfahren nach einem der Ansprüche 4 bis 5, dadurch gekennzeichnet, daß der Näherungsschalter (32) eine feste Stellung unter dem Kassettenbodenteil (15c) einnimmt und vor der überprüfung geschlossen wird und beim Anheben des Blattfilmes (26) geschlossen bleibt bzw. beim Anheben der Verstärkerfolie (24) geöffnet wird.

8. Verfahren nach einem der Ansprüche 4 bis 5, dadurch gekennzeichnet, daß der Näherungsschalter (32) eine feste Stellung über oder vor dem Kassettenbodenteil (15c) einnimmt und vor der Überprüfung geöffnet ist und beim Entnehmen des Blattfilmes (26) geöffnet bleibt bzw. beim Bewegen der Verstärkerfolie (24) mit Element (27) geschlossen wird.

9. Röntgenblattfilmkassette zur Verwendung mit einer Vorrichtung nach einem der Ansprüche 1 bis 3, bestehend aus je einem Boden- (15c) und einem schwenkbaren Deckelteil (15a), die zumindest im Bodenteil (15c) eine begrenzt beweglich gelagerte, mit einem elektrisch oder magnetisch detektierbaren Element (17; 35) verbundene Verstärkerfolie (24) aufweisen, auf der gegebenenfalls ein Röntgenblattfilm aufliegt, dadurch gekennzeichnet, daß das Element (27) als haarnadelförmig gekrümmte, schwache Blattfeder (35) ausgebildet ist, deren einer Schenkel an einer inneren Kassettenschmalseite befestigt ist und deren anderer Schenkel (35a) beim Hochschwenken der Verstärkerfolie (24) unter diese hochschwenkt und bei deren Zurückgehen in die Gebrauchslage an den befestigten Schenkel anschwenkt und in der hochgeschwenkten Stellung im Ansprechbereich des Näherungsschalters (32) liegt.

**Claims**

1. Apparatus for loading and unloading X-ray film cassettes (15), which in each case comprise a bottom part (15c) and a swivelling top part (15a) and have at least in the bottom part (15c) a reinforcing foil (24), which is supported so as to be movable to a limited extent and is connected to an electrically or magnetically detectable element (27; 35) and on which an X-ray film sheet optionally lies, having
   - a shaft (1) for receiving the X-ray sheet film cassette (15),
   - transport means (2) for introducing and dispensing the cassette (15),
   - means (5, 5a, 16) of opening and raising the top part (15a),
   - means of removing (9) and actuating (33, 34) the film,
   - an electronic control apparatus (20) for controlling loading and unloading of the cassettes (15) with sheet film (26) and
   - an apparatus for monitoring the presence of sheet film (26) in the cassette (15), characterized in that the monitoring apparatus has a capacitive or inductive proximity switch (32), in or outside of whose response range the element (27; 35) lies when the cassette (15) is open and out of or into whose response range said element is movable, with the proximity switch (32) supplying differing output signals to the control apparatus (20) when the film removal means (9), e.g. suction means, move either the sheet film (26) present or, in the absence of sheet film, the reinforcing foil (24) having the element (27; 35) and hence said element relative to the proximity switch (32), and that an indicating apparatus (31) is provided which is controlled by the control apparatus (20) in dependence upon the output signals of the proximity switch (32).

2. Apparatus according to claim 1, characterized in that the proximity switch (32) is movable together with the film removal means (9) by means of the latters' working gear (33, 34).

3. Apparatus according to claim 1, characterized in that the proximity switch (32) is arranged in a fixed manner on the appliance below the cassette bottom part (15c).

4. Process for monitoring the presence of an X-ray sheet film in an apparatus according to one of claims 1 to 3, comprising the steps:
   - introduction of an X-ray sheet film cassette (15) into a preselected position in the apparatus,
   - opening of the cassette (15),
   - actuation of the film removal means (9) to raise either the sheet film (26) lying on the reinforcing foil (24) or the reinforcing foil (24) itself, which is movable to a limited extent in the cassette bottom part (15c), together with the electrically or magnetically detectable element (27; 35) and
   - indication of information concerning the presence or absence of the sheet film (26) in dependence upon the output signal of the proximity switch.

5. Process according to claim 4, characterized in that, when there is a sheet film (26) lying on the reinforcing foil (24), said sheet film is raised by film removal means (9) from the reinforcing foil (24) and from the element (27), while said foil and element remain at rest, so that one or a plurality of state changes of the proximity switch (32), which are different to when there is no sheet film (26) lying on the reinforcing film (24), are effected and signalled to the control circuit (20).

6. Process according to claim 4 or 5, characterized in that the proximity switch (32) is moved together with the film removal means (9) and on approaching a sheet film (26) and/or the element (27) is closed and on raising of a present sheet film (26) is opened again or in the absence of a sheet film (26) and on raising of the reinforcing foil (24) remains closed.

7. Process according to one of claims 4 to 5, characterized in that the proximity switch (32) occupies a fixed position below the cassette bottom part (15c) and prior to monitoring is closed and on raising of the sheet film (26) remains closed or on raising of the reinforcing foil (24) is opened.

8. Process according to one of claims 4 to 5, characterized in that the proximity switch (32) occupies a fixed position above or in front of the cassette bottom part (15c) and prior to monitoring is open and on removal of the sheet film (26) remains open or on movement of the reinforcing foil (24) with element (27) is closed.

9. X-ray sheet film cassette for use with an apparatus according to one of claims 1 to 3, comprising in each case a bottom part (15c) and a swivelling top part (15a) and having at least in the bottom part (15c) a reinforcing foil (24), which is supported so as to be movable to a limited extent and is connected to an electrically or magnetically detectable element (17; 35) and on which an X-ray sheet film possibly lies, characterized in that the element (27) takes the form of a weak leaf spring (35) curved in a hairpin bend, one limb of which is fastened to an inner cassette narrow edge and the other limb (35a) of which, on swivelling up of the reinforcing foil (24), swivels up below said foil and, on return of said foil into the working position, swivels towards the fastened limb and, in the swivelled-up position, lies in the response range of the proximity switch (32).

**Revendications**

1. Dispositif de chargement et de déchargement de cassettes (15) de films radiographiques, dont chacune se compose d'un fond (15c) et d'un couvercle pivotant (15a) et comprend au moins dans le fond (15c) une feuille de renforcement (24) montée mobile de manière limitée et reliée à un élément (27 ; 35) détectable électriquement ou magnétiquement, un film radiographique reposant éventuellement sur ladite feuille de renforcement (24), dispositif comprenant

- une cavité (1) de logement de la cassette de film (15),
- des organes de transport (2) destinés à introduire et à extraire la cassette (15),
- des organes (5, 5a, 16) d'ouverture et de soulèvement du couvercle (15a),
- des organes de prélèvement (9) du film ainsi que de sa manipulation (33, 34),
- un dispositif électronique (20) destiné à la commande du chargement des cassettes (15) contenant un film (26) et de leur déchargement et
- un dispositif de contrôle de la présence d'un film (26) dans la cassette (15),

caractérisé en ce que le dispositif de contrôle comprend un détecteur de proximité (32) commutable par capacité ou par induction et dans ou à l'extérieur de la zone de réponse duquel se trouve l'élément (27 ; 35) lorsque la cassette (15) est ouverte et hors de laquelle ou dans laquelle cet élément est déplaçable, le détecteur de proximité (32) délivrant des signaux différents de sortie au dispositif de commande (20) lorsque les organes (9) de prélèvement du film, par exemple des ventouses, déplacent soit le film (26) présent soit, en l'absence de ce dernier, la feuille de renforcement (24) ainsi que l'élément (27 ; 35) et donc ce dernier par rapport au détecteur de proximité (32), et en ce qu'un dispositif d'affichage (31) commandé par le dispositif de commande (20) en fonction des signaux de sortie du détecteur de proximité (32) est prévu.

2. Dispositif selon la revendication 1, caractérisé en ce que le détecteur de proximité (32) est déplaçable avec les organes (9) de prélèvement du film au moyen du mécanisme (33, 34) de déplacement de ces derniers.

3. Dispositif selon la revendication 1, caractérisé en ce que le détecteur de proximité (32) est fixé à l'appareil sous le fond (15c) des cassettes.

4. Procédé de contrôle de la présence d'un film radiographique dans un dispositif selon l'une des revendications 1 à 3, comprenant les étapes consistant à :
- introduire une cassette (15) de film radiographique à une position prédéterminée dans le dispositif,
- ouvrir la cassette (15),
- actionner les organes (9) de prélèvement du film pour soulever soit le film (26) reposant sur la feuille de renforcement (24), soit la feuille de renforcement (24) elle-même, qui est mobile dans certaines limites dans le fond (15c) de la cassette, conjointement avec l'élément (27 ; 35) détectable électriquement ou magnétiquement et
- afficher une information concernant la présence ou l'absence du film (26) en fonction du signal de sortie du détecteur de proximité.

5. Procédé selon la revendication 4, caractérisé en ce que, lorsqu'un film (26) repose sur la feuille de renforcement (24), des organes (9) de prélèvement du film le soulèvent de la feuille de renforcement (24) et de l'élément (27), tandis que ces derniers sont laissés au repos, et ainsi sont provoqués un ou plusieurs autres changements d'état du détecteur de proximité (32) lorsqu'aucun film ne se trouve sur la feuille de renforcement (24) et ces changements d'état sont indiqués au circuit de commande (20).

6. Procédé selon la revendication 4 ou 5, caractérisé en ce que le détecteur de proximité (32) est déplacé conjointement avec l'organe (9) de prélèvement du film et lorsqu'il se rapproche d'un film (26) et/ou de l'élément (27), il est fermé et il est réouvert lors du soulèvement d'un film (26) qui est présent ou, en l'absence d'un film (26) et lorsque la feuille de renforcement (24) est soulevée, il reste fermé.

7. Procédé selon l'une des revendications 4 et 5, caractérisé en ce que le détecteur de proximité (32) occupe une position fixe sous le fond (15c) de la cassette et il est fermé avant le contrôle et il demeure fermé lors du soulèvement du film (26) ou il est ouvert lors du soulèvement de la feuille de renforcement (24).

8. Procédé selon l'une des revendications 4 et 5, caractérisé en ce que le détecteur de proximité (32) occupe une position fixe au-dessus ou au-devant du fond (15c) de la cassette et il est ouvert avant le contrôle et demeure ouvert lors du prélèvement du film (26) ou est fermé lors du déplacement de la feuille de renforcement (24) avec l'élément (27).

9. Cassette de film radiographique destinée à être utilisée avec un dispositif selon l'une des revendications 1 à 3, se composant d'un fond (15c) et d'un couvercle pivotant (15a), cassette comprenant au moins dans le fond (15c) une feuille de renforcement (24) qui est montée de manière à être mobile de façon limitée, qui est reliée à un élément (17 ; 35) qui est détectable électriquement ou magnétiquement et sur laquelle repose éventuellement un film radiographique, caractérisée en ce que l'élément (27) est conformé en faible lame de ressort (35) incurvée en épingle à cheveux et dont une branche est fixée sur un côté intérieur étroit de la cassette, tandis que son autre branche (35a) se relève pour se placer sous la feuille de renforcement (24) lorsque celle-ci est soulevée, cette autre branche se rabattant contre la branche fixe lorsque ladite feuille retourne à la position d'utilisation, ladite autre branche Se trouvant dans la zone de réponse du détecteur de proximité (32) lorsqu'elle est en position relevée.

Fig. 1

Fig. 2

Fig. 3

Fig. 4

Fig. 5

Fig. 6

Fig. 7

EP 0 302 335 B1